Europäisches Patentamt

European Patent Office

Office européen des brevets

(19)

(11) Numéro de publication: **0 183 881**
**A1**

(12) # DEMANDE DE BREVET EUROPEEN

(21) Numéro de dépôt: **84402479.4**

(22) Date de dépôt: **03.12.84**

(51) Int. Cl.⁴: **H 02 J 13/00**

(43) Date de publication de la demande:
**11.06.86** Bulletin **86/24**

(84) Etats contractants désignés:
**AT BE CH DE FR GB IT LI LU NL SE**

(71) Demandeur: **GHIELMETTI S.A.**
**19, rue Gay-Lussac**
**F-94430 Chennevieres-sur-Marne(FR)**

(72) Inventeur: **Le Van Suu, Maurice**
**26, rue Félix Neel**
**F-93230 Romainville(FR)**

(72) Inventeur: **Mayer, Martin**
**Biberiststrasse**
**CH-4500 Soleure(CH)**

(74) Mandataire: **Pinguet, André**
**CAPRI 28 bis, avenue Mozart**
**F-75016 Paris(FR)**

(54) **Procédé et dispositif de réception de télécommande centralisée à fréquences multiples.**

(57) Le récepteur de télécommande selon l'invention est conçu pour capter des signaux de fréquences multiples prédéterminées, acheminés par le canal du réseau de distribution de l'énergie électrique. Un signal dont la fréquence est du nombre des fréquences prédéterminées est successivement extrait par des moyens de filtrage (8), analysé par des moyens (9 et 10) de détection de porteuse et d'enveloppe, adressé par une mémoire tampon (13) à une mémoire de programme de codage (12), codé, puis mis en mémoire dans une mémoire tampon du microprocesseur (11) et comparé par ledit microprocesseur à une série de signaux qu'il a initialement stockés. Le microprocesseur (11) commande les relais de sortie. En outre, d'après les informations fournies par les moyens (9 et 10) de détection de porteuse et d'enveloppe, il cale les moyens de filtrage (8) sur la fréquence du signal, lesdits moyens de filtrage étant un filtre à capacités commutées ou à micro-électronique équivalent. La synchronisation du dispositif est assurée par la fréquence du réseau de distribution.

./...

1.

La présente invention a pour objet un procédé et un dispositif de réception de télécommande centralisée à fréquences multiples.

D'une façon générale, la réalisation d'une télécommande centralisée nécessite un émetteur pour délivrer des signaux, un canal de transmission desdits signaux et un récepteur pour capter lesdits signaux et les discriminer d'avec d'éventuels signaux parasites, quelle qu'en soit l'origine.

Un mode de réalisation particulier de télécommande centralisée, utilisé notamment par EDF, consiste à se servir du réseau de distribution d'énergie électrique comme canal de transmission de signaux émis sur une fréquence prédéterminée (bien évidemment différente de celle du secteur). L'émetteur utilisé comporte un mélangeur de fréquences pour mélanger à la fréquence du secteur les signaux de fréquence prédéterminée à émettre, lesquels résultent de la modulation, par un modulateur numérique, d'une onde engendrée par un oscillateur. Quant au récepteur, appelé généralement relais récepteur, il comporte essentiellement un circuit d'excitation et des circuits principaux basse tension de même fréquence que le secteur. Le circuit d'excitation comprend : un organe sélecteur de fréquence, calé sur la fréquence prédéterminée, ne laissant passer que les signaux de télécommande et interdisant ainsi l'accès du récepteur à toutes les fréquences parasites pouvant exister sur le réseau; un organe sélecteur d'ordres, synchronisé par la fréquence du réseau de distribution. Cet organe, après avoir été mis en marche par l'impulsion de démarrage d'un programme d'émission de télécommande, détermine, à partir des signaux dudit programme, les ordres à donner aux organes de manoeuvre (interrupteurs ou contacteurs) disposés sur les circuits principaux basse tension. Ces organes de manoeuvre peuvent fonctionner indépendamment les uns des autres, soit sur des impulsions de commande communes, soit sur des impulsions distinctes.

Dans un système de télécommande utilisé actuellement par EDF, la fréquence des signaux émis est de 175 Hz. La capacité d'information est de 40 bits, permettant de délivrer 40 commandes distinctes agissant sur les relais de sortie du relais récepteur. Il paraît intéressant de développer ces possibilités. A titre d'exemple, EDF envisage d'utiliser dans un avenir proche une nouvelle fréquence de télécommande, 188 Hz, associée à une capacité d'information bien supérieure à celle employée actuellement : 50 bits, combinés en sous-groupes, permettant de délivrer 960 commandes distinctes susceptibles de véhiculer, outre les ordres définissant la position de relais de sortie, les messages les plus divers, tels que l'adresse des relais, les masques d'adresses, etc...

La fréquence de commande 175 Hz ne devant être abandonnée que progressivement au profit de la fréquence 188 Hz, le problème s'est posé, du côté du récepteur, du traitement de deux fréquences de commande, pendant une période transitoire. Une solution consiste à utiliser deux relais récepteurs ayant respectivement leur organe sélecteur de fréquence calé sur 175 et 188 Hz. Cette solution a naturellement l'inconvénient d'être peu économe en circuits et en composants puisqu'une partie d'entre eux est identique sur chacun des deux relais récepteurs. Une autre solution, qui permet d'éviter cet inconvénient, consiste à concevoir un relais récepteur unique capable de capter l'une et l'autre fréquence.

L'objet de la présente invention, qui a pour point de départ cette seconde solution et concerne tous les types de télécommande utilisant comme canal le réseau de distribution d'énergie électrique ou tout autre réseau du même type, est un procédé et un dispositif de réception et de traitement de signaux émis sur des fréquences multiples.

Le procédé selon l'invention comporte les étapes de :

- filtrer un signal dont la fréquence appartient à une série de fréquences prédéterminées;

- analyser l'enveloppe et la porteuse dudit signal;

- mettre en mémoire ledit signal;

- comparer ledit signal avec des signaux préalablement mis en mémoire;

- commander au moins un relais de sortie. Suivant une caractéristique du procédé selon l'invention, l'étape d'analyse de l'enveloppe et de la porteuse est suivie par l'étape de caler les moyens de filtrage sur la fréquence dudit signal.

Pour mettre en oeuvre le procédé selon l'invention,on prévoit un dispositif comportant :

- des moyens de filtrage pour extraire la fréquence d'un signal appartenant à un groupe de fréquences prédéterminées;

- des moyens de détection de la porteuse et de l'enveloppe dudit signal;

- des premiers moyens de mise en mémoire pour coder le signal;

- des seconds moyens de mise en mémoire pour adresser les premiers moyens de mise en mémoire;

- des moyens de calcul et de commande pour piloter les moyens de filtrage, pour stocker initialement une série de signaux, pour comparer le signal aux signaux préalablement stockés, pour commander des relais de sortie;

- des moyens de détection de la fréquence du réseau de distribution pour synchroniser le dispositif;

- des moyens de sélection des fonctions.

Suivant une caractéristique de l'invention le dispositif comporte en outre :

- des relais de sortie;

- des moyens de contrôle des relais de sortie;

- des moyens de contrôle général pour signaler une panne éventuelle du dispositif et réinitialiser les moyens de calcul et de commande le cas échéant.

- des moyens d'économie pour optimiser la consommation des premiers et des seconds moyens de mise en mémoire.

Suivant une autre caractéristique du dispositif selon l'invention, les moyens de filtrage sont commandables de façon à pouvoir être calés sur une fréquence comprise dans un intervalle donné. Avantageusement ces moyens de filtrage sont un filtre à capacités commutées.

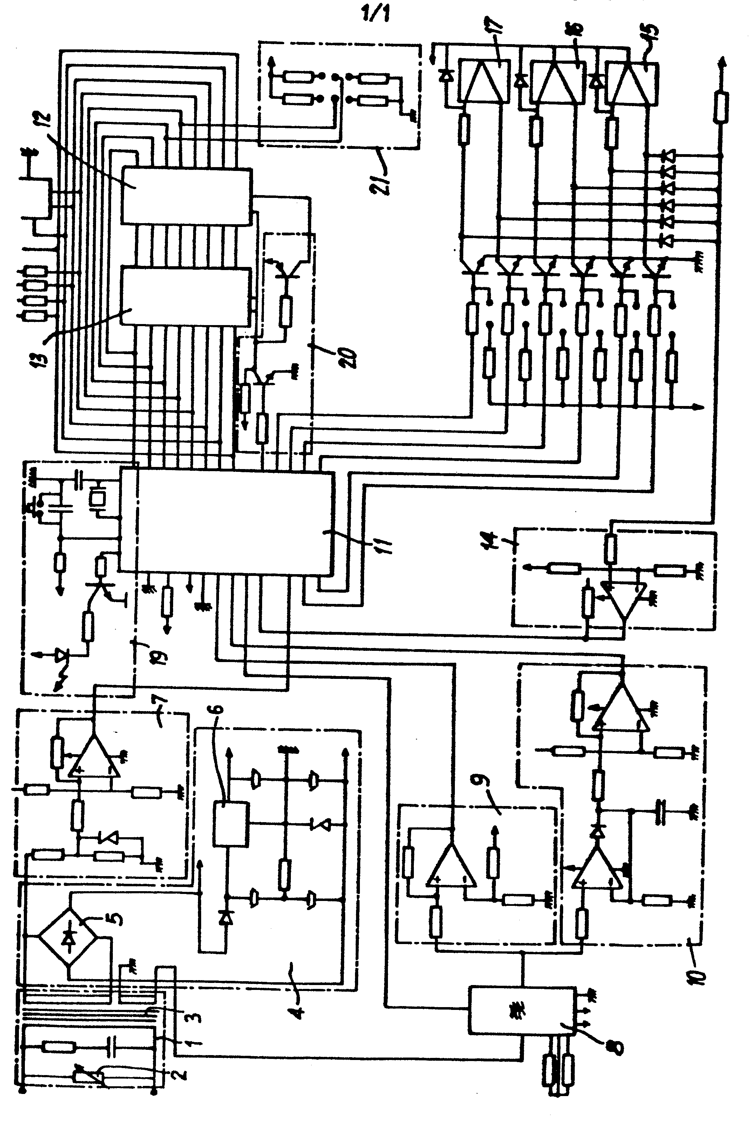

D'autres caractéristiques et avantages de la présente invention apparaîtront mieux à la lecture de la description suivante donnée à titre non limitatif et faite en relation avec l'unique figure qui représente le schéma d'un exemple de réalisation de l'invention.

Le relais récepteur pour télécommande à fréquences multiples selon l'invention comporte : un bloc adaptateur 1 comprenant en particulier un organe de protection 2 contre les surcharges et un transformateur 3 pour alimenter le relais récepteur avec du courant basse tension; un bloc d'alimentation 4 comprenant en particulier un pont redresseur 5 et un régulateur 6 pour fournir aux organes de commande et de manoeuvre un courant continu stable; un circuit de détection 7 de la fréquence F (50 Hz par exemple) du réseau de distribution; un filtre 8 pour sélectionner plusieurs fréquences prédéterminées f1, f2...fn, du type filtre à capacités commutées ou équivalent; un circuit 9 de détection de porteuse f1... fn; un circuit 10 de détection d'enveloppe; une unité de calcul , de commande et de mise en mémoire comprenant un microprocesseur 11,une mémoire de programme de codage 12 et une mémoire tampon 13; un circuit de contrôle des relais de sortie 14; un circuit de contrôle général 19 pour signaler une panne éventuelle du relais récepteur et réinitialiser le microprocesseur 11 au cas où il aurait perdu ses informations; un circuit d'économie 20 pour optimiser la consommation de la mémoire de programme de codage 12 et de la mémoire tampon 13; un circuit de sélection 21 de fonctions pour sélectionner les fonctions fréquence,commande, etc.; des relais de sortie (non représentés).

Lorsqu'un signal de fréquence fi (fi étant l'une des fréquences prédéterminées f1, f2...fn), signal qui comporte généralement une impulsion de commande suivie d'une série d'impulsions correspondant au message proprement dit, pénètre dans le relais récepteur, il subit le traitement suivant : après avoir passé à travers le filtre 8, l'impulsion de commande est analysée par les circuits de détection de porteuse 9 et d'enveloppe 10; le microprocesseur 11, mis en marche par cette impulsion de commande dont il connaît les caractéristiques de fréquence et d'amplitude, cale le filtre 8 sur la fréquence fi. Il existe différents moyens pour réaliser cette opération. On connaît notamment des filtres à micro-électronique,et des filtres à capacités commutées. Selon l'invention, on utilisera de préférence ces derniers. Ne pénètrent plus alors dans le relais récepteur que les impulsions de fréquence fi. Le signal de fréquence fi est adressé par la mémoire tampon 13 à la mémoire de programme de codage 12, puis stocké dans une mémoire tampon du microprocesseur 11 et enfin comparé par ledit microprocesseur aux différents signaux qu'il a en mémoire. Si le signal reçu correspond à l'un de ces signaux, le microprocesseur 11 communique au(x) relais de sortie concerné(s) l'ordre correspondant au signal. On a représenté sur la figure à titre d'exemple, trois commandes 15, 16, 17 pour autant de relais non représentés.

La synchronisation du relais récepteur est assurée par la fréquence F du courant du réseau de distribution, laquelle est détectée dans le relais récepteur par le circuit de détection 7 de la fréquence F, ce qui garantit la fiabilité du fonctionnement dudit relais récepteur, puisque cette même fréquence F est prise comme référence par l'émetteur.

On a représenté pour les différentes fonctions 1, 4, 7, 8, 9, 10,11 et 14, qui sont connues en elles-mêmes, des exemples de réalisation.

La présente invention n'est pas limitée aux exemples de réalisation qui viennent d'être décrits, elle est au contraire susceptible de modifications et de variantes qui apparaîtront à l'homme de l'art.

REVENDICATIONS

1 - Procédé de réception de télécommande centralisée à fréquences multiples utilisant comme canal le réseau de distribution d'énergie électrique ou tout autre réseau du même type, caractérisé en ce qu'il comporte les étapes de :

- filtrer un signal dont la fréquence appartient à une série de fréquences prédéterminées;

- analyse l'enveloppe et la porteuse dudit signal;

- mettre en mémoire ledit signal;

- comparer ledit signal avec des signaux préalablement mis en mémoire;

- commander au moins un relais de sortie.

2 - Procédé selon la revendication 1, caractérisé en ce que, après l'étape d'analyse de l'enveloppe et de la porteuse du signal, intervient l'étape de caler les moyens de filtrage sur la fréquence dudit signal.

3 - Dispositif de réception et de télécommande centralisée à fréquences multiples utilisant comme canal le réseau de distribution d'énergie électrique, caractérisé en ce qu'il comporte :

- des moyens de filtrage (8), pour extraire la fréquence d'un signal appartenant à un groupe de fréquences prédéterminées;

- des moyens de détection de la porteuse (9) et de l'enveloppe (10) dudit signal;

- des premiers moyens de mise en mémoire (12) pour coder le signal;

- des seconds moyens de mise en mémoire (13) pour adresser les premiers moyens de mise en mémoire;

- des moyens de calcul et de commande (11) pour piloter les moyens de filtrage, pour stocker initialement une série de signaux, pour comparer le signal aux signaux préalablement stockés, pour commander des relais de sortie;

- des moyens de détection de la fréquence du réseau de distribution pour synchroniser le dispositif;

- des moyens de sélection des fonctions (21).

4 - Dispositif selon la revendication 3, caractérisé en ce qu'il comporte en outre :

- des relais de sortie;

- des moyens de contrôle (14) des relais de sortie;

- des moyens de contrôle général (19) pour signaler une panne éventuelle du dispositif et réinitialiser les moyens de calcul et de commande (11) le cas échéant.

- des moyens d'économie (20) pour optimiser la consommation des premiers et seconds moyens de mise en mémoire (12 et 13).

5 - Dispositif selon l'une des revendications 3 ou 4, caractérisé en ce que les moyens de filtrage (8) sont commandables de façon à pouvoir être calés sur une fréquence comprises dans un intervalle donné.

6 - Dispositif selon la revendication 5, caractérisé en ce que les moyens de filtrage sont un filtre à capacités commutées.

1/1

0183881

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | FR-A-2 404 326 (SIEMENS)<br>* Page 2, lignes 1-10; page 4, lignes 1-13 * | 1-4 | H 02 J 13/00 |
| Y | DE-A-2 831 771 (LGZ)<br>* Page 6, lignes 14-30; page 7, ligne 20 - page 8, ligne 20; page 9, lignes 4-21; page 11, lignes 4-24; page 13, lignes 1-25; figures 1-3 * | 1-4 | |
| A | US-A-3 467 835 (R. DE COLA)<br>* Colonne 4, lignes 4-29; figure 2 * | 5,6 | |

**DOMAINES TECHNIQUES RECHERCHES (Int. Cl.4)**

H 02 J

Le présent rapport de recherche a été établi pour toutes les revendications

| Lieu de la recherche | Date d'achèvement de la recherche | Examinateur |
|---|---|---|
| LA HAYE | 10-07-1985 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82